# FASCICULE DE BREVET EUROPEEN

(11) **EP 1 455 259 B1**
(45) Date de publication et mention de la délivrance du brevet: **01.12.2010**
(21) Numéro de dépôt: 04300094.2
(22) Date de dépôt: 23.02.2004
(51) Int. Cl.: G06F 21/02

(54) **Procédé et dispositif de sélection de mode de fonctionnement d'un circuit intégré**
Methode und Apparat zum Auswählen eines Schaltkreis Betriebsmodus
Method and apparatus for selecting an operating mode in an integrated circuit

(30) Priorité: 24.02.2003 FR 0302230
(43) Date de publication de la demande: 08.09.2004
(73) Titulaire: STMicroelectronics S.A., 92120 Montrouge (FR)
(72) Inventeur: Zahra, Claude, 13190 Allauch (FR); Teglia, Yannick, 13011 Marseille (FR)
(74) Mandataire: de Beaumont, Michel

(56) Documents cités:
- US-A- 4 751 667
- US-A- 5 062 075
- US-A- 5 826 007

## Description

La présente invention concerne la sélection d'un mode de fonctionnement d'un circuit intégré parmi plusieurs modes, en particulier à l'aide d'un moyen à programmation unique permettant d'interdire ou de sélectionner de manière définitive un mode de fonctionnement prédéterminé.

Des circuits intégrés connus comportent un dispositif de sélection entre un mode réservé donnant accès à toutes les fonctionnalités du circuit, et un mode utilisateur donnant accès à un nombre limité des fonctionnalités du circuit. Un tel dispositif sert, par exemple, à mettre initialement un circuit en fonctionnement dans un mode réservé permettant de tester le circuit et d'y stocker des informations confidentielles. Le dispositif de sélection peut ensuite être verrouillé pour autoriser seulement la mise en fonctionnement du circuit dans un mode utilisateur ne permettant pas de lire ou de modifier les informations confidentielles stockées.

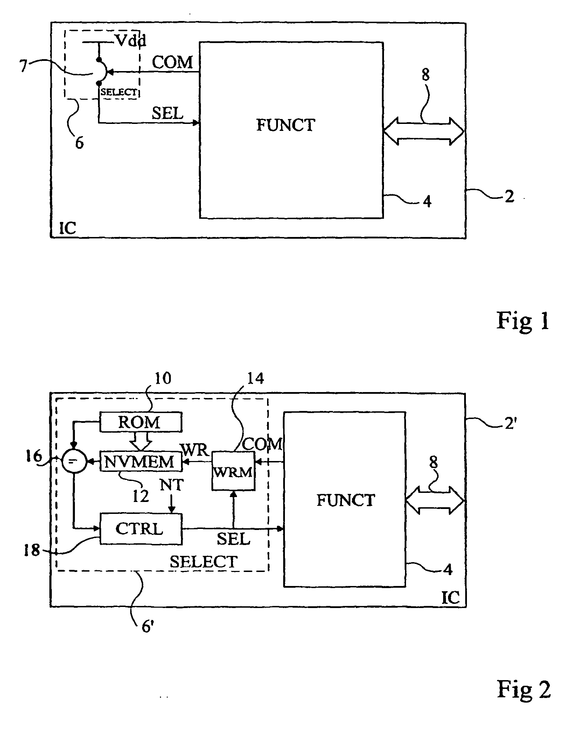

La figure 1 représente schématiquement un circuit intégré 2 (IC) destiné à une application sécurisée porté par exemple par une carte à puce et comportant un bloc fonctionnel 4 (FUNCT) prévu pour fournir un signal de commande COM à une borne d'entrée d'un dispositif de sélection 6 (SELECT), et pour recevoir un signal de sélection SEL de la borne de sortie du dispositif 6. Le dispositif 6 comprend un fusible 7 connecté entre un potentiel d'alimentation Vdd et la borne de sortie du dispositif 6, dont la fusion est commandée par la réception d'un signal COM actif. L'environnement du circuit 2, relié au bloc 4 par un accès d'entrée/sortie 8, n'est pas représenté.

Le bloc 4 est prévu pour fonctionner dans le mode réservé s'il reçoit un signal SEL actif, c'est-à-dire tant que le fusible 7 n'est pas fondu, et dans le mode utilisateur sinon. Un système équivalent peut également utiliser un anti-fusible qui ferme un circuit pour rendre une fonction inactive. Le signal COM est inactif tant qu'un opérateur ne commande pas son activation. Initialement, c'est-à-dire après fabrication du circuit, le fusible 7 n'est pas fondu et le bloc 4 fonctionne dans le mode réservé. Un opérateur peut tester et programmer le bloc 4 par l'accès 8. Une fois le test et la programmation du bloc 4 terminés, l'opérateur commande au bloc 4 de fournir un signal COM actif à la borne d'entrée du dispositif 6 pour faire fondre le fusible 7 et entraîner une sélection définitive du mode utilisateur.

Le fusible 7 est réalisé dans le circuit intégré pour interdire à un utilisateur de réactiver le mode réservé par une manipulation du signal SEL. Malheureusement, un tel fusible peut dans certaines conditions se reformer après avoir été fondu. On perd alors le caractère non volatil de la programmation de l'état du signal SEL opérée par le fusible.

De plus, commander la fusion d'un fusible nécessite une puissance importante, ce qui impose au bloc 4 ou au dispositif 6 de comporter des éléments de puissance. De tels éléments accroissent la consommation et la taille du circuit.

En outre, la réalisation de fusibles dans un circuit intégré impose d'utiliser certaines étapes de fabrication, par exemple des étapes de dépôt d'un oxyde tunnel, qui ne sont pas disponibles dans tous les processus de fabrication de circuits intégrés, par exemple les circuits intégrés à mémoire ferromagnétique. Il n'est ainsi actuellement pas possible de réaliser un circuit à mémoire ferromagnétique muni d'un dispositif de sélection de mode de fonctionnement tel qu'en figure 1.

Le document EP-A-0 610 886 décrit un mécanisme de sélection d'un mode de fonctionnement dans un circuit intégré utilisant une mémoire morte et une mémoire programmable non-volatile commandable pour stocker des valeurs à comparer pour sélectionner le mode de fonctionnement.

Le document US-A-5 826 007 décrit un mécanisme de sélection du mode de fonctionnement d'un circuit intégré utilisant des bits drapeaux pour conditionner le mode de fonctionnement.

Un objet de la présente invention est de prévoir un dispositif de sélection de mode de fonctionnement d'un circuit intégré qui soit verrouillable de façon définitive et qui ne comporte aucun fusible ou anti-fusible présentant des problèmes analogues.

Un autre objet de la présente invention est de prévoir un tel dispositif qui occupe une surface réduite.

Un autre objet de la présente invention est de prévoir un tel dispositif qui ait une consommation de puissance réduite.

La présente invention vise également un circuit intégré comportant un tel dispositif de sélection.

Un autre objet de la présente invention est un procédé de sélection de mode de fonctionnement d'un circuit intégré tel que mis en oeuvre par le dispositif de sélection précédent.

Pour atteindre ces objets, ainsi que d'autres, la présente invention prévoit un dispositif de sélection de mode de fonctionnement d'un circuit intégré comprenant une mémoire morte stockant au moins une valeur prédéterminée composée de mots de données, une mémoire programmable non-volatile commandable pour stocker ladite valeur prédéterminée, un comparateur indiquant combien de mots de données de la valeur stockée dans la mémoire programmable sont identiques aux mots de données de la valeur prédéterminée, et un moyen de commande inactivant un signal de sélection de mode de fonctionnement lorsque le nombre de mots identiques est supérieur à un seuil prédéterminé.

Selon un mode de réalisation de la présente invention, la valeur stockée dans la mémoire programmable varie avec le temps et le dispositif comprend un moyen d'écriture pour, lorsque le signal de sélection est inactivé, réécrire à intervalle régulier ou non la valeur prédéterminée dans la mémoire programmable.

Selon un mode de réalisation de la présente invention, le moyen d'écriture est prévu pour réécrire la valeur prédéterminée dans la mémoire programmable à chaque mise sous tension du circuit intégré lorsque le signal de sélection est inactivé.

Selon un mode de réalisation de la présente invention, le moyen d'écriture, le comparateur et le moyen de commande sont mis en oeuvre sous forme logicielle par un microprocesseur.

Selon un mode de réalisation de la présente invention, ledit seuil correspond à entre 70% et 90% du nombre de mots comparés.

Selon un mode de réalisation de la présente invention, le dispositif comporte un bloc fonctionnel prévu pour fonctionner dans un premier mode de fonctionnement lorsque le signal de sélection est activé et pour fonctionner dans un deuxième mode de fonctionnement dans le cas contraire, le bloc fonctionnel permettant de commander à la mémoire programmable de stocker la valeur prédéterminée.

La présente invention vise également un procédé de sélection du mode de fonctionnement d'un circuit intégré entre un mode réservé et un mode utilisateur, consistant à :
a/ déterminer combien de mots de données d'une valeur stockée dans une mémoire programmable non volatile du circuit sont identiques à des mots de données d'au moins une valeur prédéterminée stockée dans une mémoire morte du circuit ; et
b/ sélectionner le mode utilisateur lorsque le nombre de mots identiques est supérieur à un seuil prédéterminé.

Selon un mode de réalisation de la présente invention, ledit seuil correspond à entre 70% et 90% du nombre de mots de la valeur prédéterminée.

La présente invention vise également un procédé de verrouillage du mode utilisateur sélectionné par la mise en oeuvre du procédé précédent, consistant à empêcher tout stockage d'une valeur autre que la valeur prédéterminée dans la mémoire programmable.

Selon un mode de réalisation de la présente invention, la valeur prédéterminée est recopiée dans la mémoire programmable au moins à chaque mise sous tension du circuit.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, représente schématiquement un circuit intégré muni d'un dispositif classique de sélection de mode de fonctionnement ; et
la figure 2 représente schématiquement un circuit intégré muni d'un dispositif de sélection de mode de fonctionnement selon un mode de réalisation de la présente invention.

De mêmes références représentent de mêmes éléments aux différentes figures. Seuls les éléments nécessaires à la compréhension de l'invention ont été représentés.

La figure 2 représente schématiquement un circuit intégré 2' (IC) comportant un bloc fonctionnel 4 (FUNCT) relié à un environnement non représenté par un accès d'entrée/sortie 8. Le bloc 4 est prévu pour fournir un signal COM à un dispositif de sélection 6' (SELECT) selon la présente invention, et pour recevoir un signal SEL du dispositif 6'.

Selon un mode de réalisation de la présente invention, le dispositif 6' comprend une mémoire morte 10 (ROM) stockant une valeur prédéterminée (ou code) composée de mots de données. Une mémoire programmable 12 (NVMEM) non volatile par exemple de type FeRAM, de préférence de même taille que la mémoire 10, est connectée de manière à recopier le contenu de la mémoire morte 10 en réponse à l'activation d'un signal d'écriture WR produit par un moyen d'écriture 14 (WRM). Le moyen 14 est prévu pour activer le signal WR en réponse à l'activation du signal COM ou après une mise sous tension du circuit si le signal SEL est inactif. Un comparateur 16 est connecté de manière à indiquer combien de mots contenus dans la mémoire 12 sont identiques en ordre et en contenu aux mots contenus dans la mémoire 10. Un moyen de commande 18 (CTRL) relié en sortie du comparateur 16 produit un signal SEL actif tant que le nombre de mots identiques est inférieur à un seuil prédéterminé NT. Le seuil NT, qui sera décrit plus en détail par la suite, est de préférence inférieur au nombre total N des mots stockés dans la mémoire 10. Au sens de l'invention, un mot peut être composé d'un seul bit.

Le bloc 4 fonctionne comme précédemment dans le mode réservé s'il reçoit un signal SEL actif et dans le mode utilisateur sinon. Le signal COM est inactif tant qu'un opérateur ne commande pas son activation. La mémoire 12 est telle qu'initialement, c'est-à-dire après fabrication du circuit et avant toute écriture, elle stocke une valeur indéterminée. Cette valeur indéterminée dépend principalement de la structure de la mémoire 12, et peut être évaluée par simulation et confirmé par caractérisation. Le seuil NT et la valeur stockée dans la mémoire 10 sont choisis de telle manière que les mémoires 10 et 12 stockent initialement un nombre de mots identiques inférieur au seuil NT, de sorte que le moyen de commande 18 produit initialement un signal SEL actif. Le bloc 4 fonctionne ainsi initialement dans le mode réservé. Le seuil NT correspond de préférence à entre 70% et 90% du nombre de mots de la valeur prédéterminée.

Pour sélectionner le mode utilisateur, un opérateur peut commander au bloc 4 d'activer le signal COM et par là de recopier la valeur prédéterminée stockée dans la mémoire 10 dans la mémoire 12. Tous les mots de la mémoire 12 étant alors identiques à ceux de la mémoire 10, le seuil NT est dépassé et le moyen de commande 18 inactive le signal SEL. La connexion de la mémoire 12 est telle qu'il n'est pas possible d'écrire dans la mémoire 12 une valeur autre que la valeur prédéterminée stockée dans la mémoire 10. La sélection du mode utilisateur est définitive, et il n'est plus possible de sélectionner le mode réservé.

De manière connue, une valeur stockée dans une mémoire non volatile telle que la mémoire 12 peut varier avec le temps, par exemple sous l'effet de radiations. De préférence, le seuil NT est choisi en fonction des caractéristiques de la mémoire 12 pour que le nombre de mots identiques dans les mémoires 10 et 12 reste supérieur au seuil NT malgré une faible variation de la valeur stockée dans la mémoire 12. Par ailleurs, pour éviter qu'une telle variation ne finisse par écarter trop la valeur stockée dans la mémoire 12 de la valeur prédéterminée stockée dans la mémoire 10, le moyen d'écriture 14 est prévu pour réécrire (rafraîchir) la valeur prédéterminée dans la mémoire 12, par exemple à chaque mise sous tension du circuit lorsque le signal SEL est inactif. Le choix d'un autre intervalle de rafraîchissement (par exemple périodique) est à la portée de l'homme du métier en fonction de la mémoire 12 utilisée et de l'application (notamment en fonction de la durée de maintien sous tension du circuit). Les deux intervalles (à chaque mise sous tension et périodique) sont bien entendu combinables.

La présente invention permet ainsi d'utiliser une mémoire programmable non volatile ayant des performances de conservation de données relativement faibles, ce qui réduit le coût du dispositif.

Un autre avantage de l'invention est que le dispositif 6' peut être réalisé dans toute technologie permettant la fabrication de mémoires programmables non volatiles, notamment des mémoires ferromagnétiques.

Un autre avantage de l'invention est que le dispositif 6' occupe une surface réduite et ne requiert aucun élément de puissance pour griller un éventuel fusible.

Un dispositif de sélection selon la présente invention a été représenté comme comprenant un moyen d'écriture, un comparateur et un moyen de commande distincts. Cependant, la présente invention prévoit également selon un mode de réalisation de mettre en oeuvre le moyen d'écriture, le comparateur et le moyen de commande sous forme logicielle à l'aide d'un microprocesseur.

La présente invention a été décrite en relation avec un mode de réalisation dans lequel la mémoire morte stocke une seule valeur prédéterminée, mais en pratique, la mémoire morte peut stocker plusieurs valeurs prédéterminées qui sont recopiées ensemble dans la mémoire non volatile. Le comparateur peut dans ce cas être prévu pour déterminer le nombre de mots identiques pour chacune des valeurs séparément. Le moyen de commande est alors prévu pour inactiver le signal de sélection si le nombre de mots identiques est supérieur au seuil pour chaque valeur, ou pour un nombre prédéterminé de valeurs.

Bien entendu, la présente invention est susceptible de diverses variantes et modifications qui apparaîtront à l'homme du métier. En particulier, le dispositif de sélection a été représenté distinct du bloc fonctionnel du circuit intégré, mais il pourra en pratique être intégré au bloc fonctionnel, notamment dans le cas d'un microprocesseur.

De plus, l'invention a été décrite en relation avec une sélection entre un mode réservé et un mode utilisateur, mais l'homme du métier adaptera sans difficulté l'invention à un plus grand nombre de modes de fonctionnement. Le mode réservé peut ainsi être subdivisé en une pluralité de sous-modes réservés. A titre d'exemple, chaque sous-mode réservé peut correspondre à une valeur de la mémoire programmable qui appartient à une plage plus ou moins proche de la valeur de la mémoire morte, accordant à l'utilisateur des droits d'autant plus grands que la plage est proche de la valeur de la mémoire morte.

En outre, le mode utilisateur pourra être divisé en plusieurs sous-modes de fonctionnement dont la sélection pourra être commandée de manière classique par logiciel ou par une activation de broches particulières.

L'invention a été décrite en relation avec un circuit intégré dont le bloc fonctionnel passe en mode utilisateur dès que le signal de sélection produit par le dispositif de sélection est inactif, mais l'homme du métier adaptera sans difficulté la présente invention à un circuit intégré dont le bloc fonctionnel passe en mode utilisateur à la première mise sous tension qui suit l'activation du signal de sélection.

Enfin, le choix du nombre et de la taille des mots stockés dans les mémoires ainsi que le seuil à partir duquel on considère qu'il y a identité entre eux est à la portée de l'homme du métier en fonction de l'application et notamment de la fiabilité du caractère non volatil de la mémoire programmable. Par exemple, dans une application aux cartes à puces, on utilise deux valeurs prédéterminées d'un octet et le seuil est de six bits par octet (75%). La taille d'un mot au sens de l'invention est alors d'un bit. On peut également prévoir une identité octet à octet avec un seuil de six octets sur huit.

## Revendications

1. Dispositif (6') de sélection de mode de fonctionnement d'un circuit intégré (2'), comprenant :
une mémoire morte (10) apte à stocker au moins une valeur prédéterminée;
une mémoire programmable non-volatile (12) commandable apte à stocker ladite valeur prédéterminée,
**caractérisé en ce qu'**il comporte un comparateur (16) indiquant combien de mots de données de la valeur stockée dans la mémoire programmable sont identiques aux mots de données de la valeur prédéterminée, cette valeur comportant plusieurs mots de données ; et
un moyen de commande (18) inactivant un signal (SEL) de sélection de mode de fonctionnement lorsque le nombre de mots identiques est supérieur à un seuil prédéterminé (NT), ledit seuil définissant un nombre de mots inférieur au nombre de mots de ladite valeur prédéterminée.

2. Dispositif selon la revendication 1, dans lequel la valeur stockée dans la mémoire programmable (12) varie avec le temps, comprenant un moyen d'écriture (14) pour, lorsque le signal (SEL) de sélection est inactivé, réécrire à intervalle régulier ou non la valeur prédéterminée dans la mémoire programmable (12).

3. Dispositif selon la revendication 2, dans lequel le moyen d'écriture (14) est prévu pour réécrire la valeur prédéterminée dans la mémoire programmable (12) à chaque mise sous tension du circuit intégré (2') lorsque le signal (SEL) de sélection est inactivé.

4. Dispositif selon la revendication 2 ou 3, dans lequel le moyen d'écriture (14), le comparateur (16) et le moyen de commande (18) sont mis en oeuvre sous forme logicielle par un microprocesseur.

5. Dispositif selon l'une quelconque des revendications 1 à 4, dans lequel ledit seuil (NT) correspond à entre 70% et 90% du nombre de mots comparés.

6. Circuit intégré (2') comportant un dispositif (6') selon l'une quelconque des revendications précédentes et comportant un bloc fonctionnel (4) prévu pour fonctionner dans un premier mode de fonctionnement lorsque le signal (SEL) de sélection est activé et pour fonctionner dans un deuxième mode de fonctionnement dans le cas contraire, le bloc fonctionnel permettant de commander à la mémoire programmable (12) de stocker la valeur prédéterminée.

7. Procédé de sélection du mode de fonctionnement d'un circuit intégré entre un mode réservé et un mode utilisateur, **caractérisé en ce qu'**il comporte les étapes de :
a/ déterminer combien de mots de données d'une valeur stockée dans une mémoire programmable non volatile (12) du circuit sont identiques à des mots de données d'au moins une valeur prédéterminée stockée dans une mémoire morte (10) du circuit ladite valeur comportant plusieurs mots ; et
b/ sélectionner le mode utilisateur lorsque le nombre de mots identiques est supérieur à un seuil prédéterminé (NT), ledit seuil définissant un nombre de mots inférieur au nombre de mots de ladite valeur prédéterminée.

8. Procédé selon la revendication 7, dans lequel ledit seuil correspond à entre 70% et 90% du nombre de mots de la valeur prédéterminée.

9. Procédé de verrouillage du mode utilisateur sélectionné par la mise en oeuvre du procédé selon la revendication 7 ou 8, consistant à empêcher tout stockage d'une valeur autre que la valeur prédéterminée dans la mémoire programmable (12).

10. Procédé de verrouillage du mode utilisateur selon la revendication 9, dans lequel la valeur prédéterminée est recopiée dans la mémoire programmable (12) au moins à chaque mise sous tension du circuit (2').

## Claims

1. A device (6') for selecting the operating mode of an integrated circuit (2'), comprising:
a ROM (10) adapted to store at least one predetermined value;
a controllable non-volatile programmable memory (12) adapted to store said predetermined value;
**characterized in that** it comprises:
a comparator (16) indicating how many data words of the value stored in the programmable memory are identical to the data words of the predetermined value said value comprising a plurality of data words; and
control means (18) deactivating the signal (SEL) for selecting the operating mode when the number of identical words is greater than a predetermined threshold (NT), said threshold defining a number of words smaller than the number of words of said predetermined value.

2. The device of claim 1, wherein the value stored in the programmable memory (12) varies along time and the device comprises writing means (14) for, when the selection signal (SEL) is deactivated, rewriting at an interval that can be regular or not the predetermined value into the programmable memory (12).

3. The device of claim 2, wherein said writing means (14) are provided to rewrite the predetermined value into the programmable memory (12) upon each powering-on of the integrated circuit (2') when the selection signal (SEL) is deactivated.

4. The device of claim 2 or 3, wherein said writing means (14), the comparator (16), and the control means (18) are implemented in software form by a microprocessor.

5. The device of any of claims 1 to 4, wherein said threshold (NT) corresponds to from 70% to 90% of the number of compared words.

6. An integrated circuit (2') comprising the device (6') of any of the foregoing claims and comprising a functional block (4) provided to operate in a first operating mode when the selection signal (SEL) is activated and to operate in a second operating mode otherwise, the functional block enabling controlling the programmable memory (12) to store the predetermined value.

7. A method for selecting the operating mode of an integrated circuit between a reserved mode and a user mode, **characterized in that** it comprises the steps of:
a/ determining how many data words of a value stored in a non-volatile programmable memory (12) of the circuit are identical to data words of at least one predetermined value stored in a ROM (10) of the circuit, said value comprising a plurality of data words; and
b/ selecting the user mode when the number of identical words is greater than a predetermined threshold (NT) said threshold defining a number of words smaller than the number of words of said predetermined value.

8. The method of claim 7, wherein said threshold corresponds to from 70% to 90% of the number of words of the predetermined value.

9. A method for locking the user mode selected by the implementation of the method of claim 7 or 8, consisting of preventing any storage of a value other than the predetermined value in the programmable memory (12).

10. The user mode locking method of claim 9, wherein the predetermined value is copied into the programmable memory (12) at least at each powering-on of the circuit (2').

## Patentansprüche

1. Eine Vorrichtung (6') zur Auswahl einer Betriebsart einer integrierten Schaltung (2'), wobei Folgendes vorgesehen ist:
ein ROM (10), geeignet zur Speicherung von mindestens einem vorbestimmten Wert;
ein steuerbarer nicht-flüchtiger programmierbarer Speicher (12), geeignet zur Speicherung des erwähnten vorbestimmten Wertes;
**dadurch gekennzeichnet, dass** Folgendes vorgesehen ist:
ein Komparator (16), der anzeigt wie viele Datenworte des in dem programmierbaren Speicher gespeicherten Wertes identisch zu den Datenworten des vorbestimmten Wertes des erwähnten Wertes sind, die eine Vielzahl von Datenworten aufweisen; und
Steuermittel (18) zur Deaktivierung des Signals (SEL) zur Auswahl der Betriebsart, wenn die Anzahl der identischen Worte größer ist als eine vorbestimmte Schwelle (NT), wobei die Schwelle eine Anzahl von Worten definiert, die kleiner ist als die Anzahl von Worten des erwähnten vorbestimmten Wertes.

2. Die Vorrichtung nach Anspruch 1, wobei der in dem programmierbaren Speicher (12) gespeicherte Wert sich mit der Zeit verändert und wobei die Vorrichtung Schreibmittel (14) aufweist, um dann, wenn das Auswahlsignal (SEL) deaktiviert ist, den vorbestimmten Wert in den programmierbaren Speicher (12) wieder einzuschreiben und zwar in einem Intervall, das regulär oder nicht-regulär sein kann.

3. Die Vorrichtung nach Anspruch 2, wobei die Schreibmittel (14) vorgesehen sind um den vorbestimmten Wert in den programmierbaren Speicher (12) wieder einzuschreiben und zwar bei jedem Einschalten der integrierten Schaltung (2'), wenn das Auswahlsignal (SEL) deaktiviert wird.

4. Die Vorrichtung nach Anspruch 2 oder 3, wobei die Schreibmittel (14), der Komparator (16) und die Steuermittel (18) in Software-Form durch einen Mikroprozessor implementiert werden.

5. Die Vorrichtung nach einem der Ansprüche 1 bis 4, wobei die Schwelle (NT) von 70% bis 90% der Anzahl von verglichnen Worten entspricht.

6. Eine integrierte Schaltung (2'), die die Vorrichtung (6') gemäß einem der vorgehenden Ansprüche aufweist und einen Funktionsblock (4) umfasst, und zwar vorgesehen zum Betrieb in einer ersten Betriebsart dann, wenn das Auswahlsignal (SEL) aktiviert ist und um in einer zweiten Betriebsart ansonsten zu arbeiten, wobei der Funktionsblock die Steuerung des programmierbaren Speichers (12) ermöglicht, um den vorbestimmten Wert zu speichern.

7. Ein Verfahren zur Auswahl der Betriebsart einer integrierten Schaltung zwischen einer reservierten Betriebsart und einer Benutzerbetriebsart, **dadurch gekennzeichnet, dass** die folgenden Schritte vorgesehen sind:
a) Bestimmen wie viele Datenworte eines Wertes in einem nichtflüchtigen programmierbaren Speicher (12) der Schaltung gespeichert sind, und zwar identisch zu Datenworten von mindestens einem vorbestimmten Wert, gespeichert in einem ROM (10) der Schaltung, wobei der Wert eine Vielzahl von Datenworten aufweist; und
b) Auswahl der Benutzerbetriebsart, wenn die Anzahl der identischen Worte größer ist als eine vorbestimmte Schwelle (NT), wobei die Schwelle eine Anzahl von Worten kleiner als die Anzahl von Worten des erwähnten vorbestimmten Wertes definiert.

8. Verfahren nach Anspruch 7, wobei die Schwelle von 70% bis 90% der Anzahl der Worte des vorbestimmten Werts entspricht.

9. Ein Verfahren zur Verriegelung der Benutzerbetriebsart, ausgewählt durch die Implementierung des Verfahrens des Anspruchs 7 oder 8, wobei Folgendes vorgesehen ist:
Verhinderung jedweder Speicherung eines Wertes, der anders ist als der vorbestimmte Wert in dem programmierbaren Speicher (12).

10. Das Benutzerbetriebsart-Verriegelungsverfahren nach Anspruch 9, wobei der vorbestimmte Wert in den programmierbaren Speicher (12) einkopiert ist, und zwar mindestens bei jedem Einschalten der Schaltung (2').
